# EUROPÄISCHE PATENTSCHRIFT

(11) **EP 1 544 482 B1**
(45) Veröffentlichungstag und Bekanntmachung des Hinweises auf die Patenterteilung: **02.01.2008**
(21) Anmeldenummer: 04106493.2
(22) Anmeldetag: 13.12.2004
(51) Int. Cl.: F16B 35/04, F16B 25/10

(54) **Schraube für den Einsatz bei Fenster- oder Türprofilen**
Screw to be used with window or door profiles
Vis destinée à des profilés de fenêtre ou de porte

(30) Priorität: 18.12.2003 DE 20319690 U
(43) Veröffentlichungstag der Anmeldung: 22.06.2005
(73) Patentinhaber: SFS intec Holding AG, 9435 Heerbrugg (CH)
(72) Erfinder: Sieber, Alex, 9434 Au (CH)

(56) Entgegenhaltungen:
- DE-U1- 9 405 595
- "electronic catalog" METRIC SCREW TOOL COMPANY, [Online] 1999, XP002319244 WAKEFIELD - MA 01880 - USA Gefunden im Internet: URL:http://www.metricscrew-toolco.com> [gefunden am 2005-02-25]

## Beschreibung

Die Erfindung betrifft eine Schraube für den Einsatz bei Fenster- oder Türprofilen, bestehend aus einem mit einem Gewinde versehenen Schaft, einer Bohrspitze und einem mit einem Werkzeugangriff ausgestatteten Kopf.

Eine solche Schraube ist aus dem Dokument DE-U-94 05 595 bekannt.

Bei der Montage im Bereich von Fenster- oder Türprofilen werden zur gegenseitigen Verbindung von Profilen oder zur Befestigung von Beschlägen usw. eine Reihe von Schrauben benötigt. Es wurden dabei für die verschiedenen Einsatzzwecke in den Bereich von Kunststoffprofilen oder in den Bereich mit eingesetzten Metallprofilen oder -beschlägen auch entsprechend verschiedene Schrauben mit einem Blechgewinde (in der Regel mit einem Gewindeaussendurchmesser von 3,9 mm) oder mit einem metrischen Gewinde (in der Regel mit einem M4-Gewinde) benötigt. Daher waren auch die Lagerhaltung für die Vielzahl verschiedener Schrauben und auch die Fertigungskosten entsprechend hoch.

Die vorliegende Erfindung hat sich daher zur Aufgabe gestellt, eine Schraube der eingangs genannten Art zu schaffen, die einen Grossteil aller Einsatzgebiete bei Fenster- oder Türprofilen abdeckt.

Dies gelingt erfindungsgemäss dadurch, dass die Schraube ein metrisches Gewinde mit einem Verhältnis von Durchmesser zu Gewindesteigung von annähernd 4:1 aufweist.

Bei einem rein metrischen Gewinde (bei annähernd M4) ist dieses Verhältnis annähernd 5,7:1 und bei einem reinen Blechschraubengewinde (mit Aussendurchmesser 3,9 mm) ist dieses Verhältnis annähernd 3:1. Mit dem erfindungsgemäss nun vorgeschlagenen, an sich metrischen Gewinde, welches jedoch eine andere Gewindesteigung hat als ein übliches metrisches Gewinde ist eine Möglichkeit geschaffen worden, dass eine Type von Schrauben für fast alle Anwendungen im Fenster- und Türenbau eingesetzt werden kann.

Ferner wird vorgeschlagen, dass ein metrisches Gewinde mit einem Durchmesser von annähernd 3,9 mm und einer Gewindesteigung von annähernd 1,0 mm vorgesehen ist. Dies ist eine bevorzugte Ausführungsvariante, die eine optimale Leistung in den meisten Einsatzfällen von Schrauben bei Fenster- oder Türprofilen mit sich bringt.

Im Rahmen der Erfindung ist es auch vorteilhaft, wenn das Verhältnis von Durchmesser der Schraube und Länge der Bohrspitze annähernd 1:2 beträgt. Gerade diese Ausgestaltung bringt es mit sich, dass es praktisch zu keinen Ausfällen beim Einsatz der Schrauben in Schraubautomaten kommt. Es ist also durchaus ohne Probleme möglich, solche Schrauben einzusetzen bei einem Aufbau wie folgt: 3 mm PVC /10 mm Luftspalt /1,2 mm PVC /1,5 mm Stahl.

In diesem Zusammenhang ist eine besondere Variante darin zu sehen, wenn ein metrisches Gewinde mit einem Aussendurchmesser von 3,9 mm und einer Gewindesteigung von 1,0 mm vorgesehen ist und die Länge der Bohrspitze 7,0 mm beträgt. Mit einer solchen Schraube können ohne weiteres Bohrleistungen im Stahl von 1 bis 3 mm erzielt werden.

Eine weitere vorteilhafte Ausgestaltung sieht vor, dass die Schraube als Senkkopfschraube ausgebildet ist. Es ist damit auch eine Einsenkung des Kopfes in dem eigentlich immer aussen liegenden Kunststoffwandung eines Profils möglich, wobei keine Ansenkrippen oder andere Fräselemente erforderlich sind.

In diesem Zusammenhang ist es auch zweckmässig, wenn die Oberseite des Schraubenkopfes linsenförmig konvex ausgebildet und mit einem Innenangriff und/oder einem Angriffsschlitz versehen ist. Es ist dadurch ein ästhetisch optimaler Abschluss gegeben, obwohl das erforderliche Eindrehmoment gut übertragen werden kann.

Weitere erfindungsgemässe Merkmale und besondere Vorteile werden in der nachstehenden Beschreibung anhand der Zeichnung noch näher erläutert. Es zeigen:
Fig. 1 eine erfindungsgemässe Schraube in Seitenansicht;
die Fig. 2 bis 4 verschiedene Varianten von Fenster- oder Türprofilen, bei welchen eine erfindungsgemässe Schraube zum Einsatz kommt.

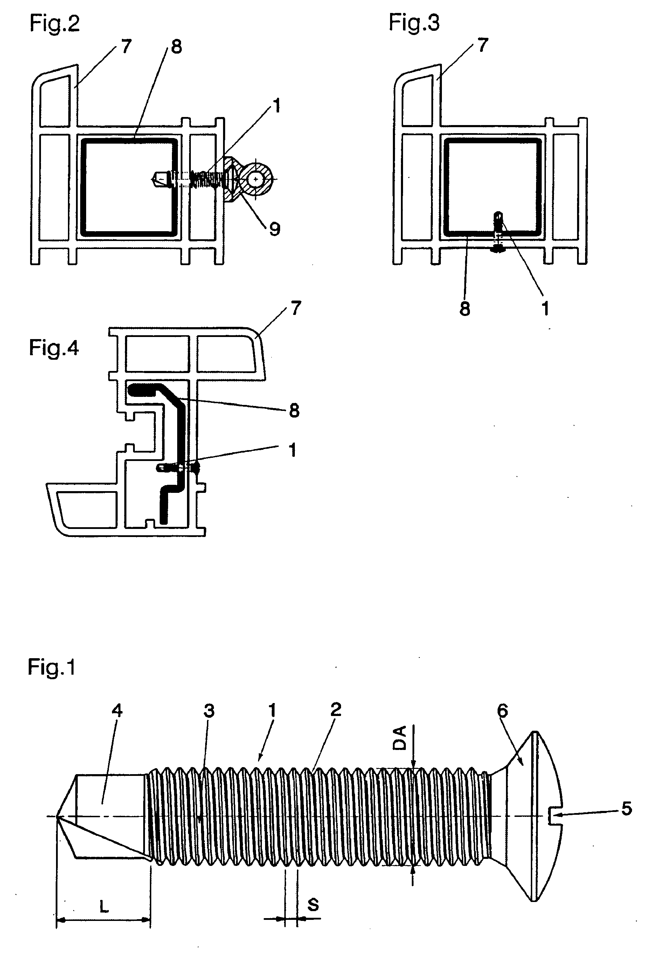

Die in Fig. 1 vergrössert dargestellte Schraube 1 ist für den Einsatz bei Fenster- oder Türprofilen vorgesehen. Die Schraube 1 besteht aus einem mit einem Gewinde 2 versehenen Schaft 3, einer Bohrspitze 4 und einem mit einem Werkzeugangriff 5 ausgestatteten Kopf 6. Die Schraube weist ein metrisches Gewinde 2 mit einem Verhältnis von Durchmesser DA zu Gewindesteigung S von annähernd 4:1 auf. Das metrisches Gewinde 2 ist mit einem Durchmesser DA von annähernd 3,9 mm und einer Gewindesteigung S von annähernd 1,0 mm ausgeführt.

Das Verhältnis von Durchmesser DA der Schraube 1 und Länge L der Bohrspitze beträgt annähernd 1:2. Eine konkrete Ausführung sieht vor, ein metrisches Gewinde 2 einzusetzen, welches einen Aussendurchmesser DA von 3,9 mm und einer Gewindesteigung S von 1,0 mm aufweist. Die Länge L der Bohrspitze beträgt bei dieser Ausführungsvariante 7,0 mm.

Die angeführten Verhältnisse zwischen Durchmesser DA und Gewindesteigung S sowie der Länge L der Bohrspitze 4 können sich natürlich in entsprechendem Rahmen ändern und sind daher im Wesentlichen für Schrauben der Durchmessergrösse um 3,9 oder 4.0 mm exakt zutreffend. Die an sich ähnlichen Werte sind auch bei Schrauben grösseren Durchmessers einzuhalten, wobei aber in der Regel gerade im Fenster- oder Türprofilbereich immer Schrauben mit einem Aussendurchmesser DA von etwa 3,9 bis 4.0 mm eingesetzt werden.

Eine zweckmässige Ausgestaltung sieht noch vor, das Gewinde 2 unmittelbar an die Bohrspitze anschliessend beginn zu lassen und über die ganze Länge des Schaftes 3 der Schraube 1 zu führen.

Die Schraube 1 kann als Senkkopfschraube ausgebildet sein. In der Regel kann dies ein glatter Kegelstumpf sein. Es wäre aber auch denkbar, hier Fräsrippen anzuordnen, falls nur dadurch ein ordnungsgemässes Versenken möglich ist.

Die Oberseite des Schraubenkopfes 6 ist vorteilhaft linsenförmig konvex ausgebildet und mit einem Innenangriff und/oder einem Angriffsschlitz 5 versehen.

Aufgrund der erfindungsgemässen Massnahmen kann nicht nur eine optimale Bohrund Setzleistung auf fast allen Einsatzbereichen bei Fenster- oder Türprofilen erreicht werden, sondern es ergibt sich daraus auch die Möglichkeit einer Sortimentsbereinigung bei den einzusetzenden Schrauben, was zusätzlich zu einer Minimierung der Kosten führt.

In den Fig. 2 bis 4 sind verschiedene Ausführungsvarianten von Kunststoffprofilen 7 und Metallprofilen 8 sowie von zu befestigenden Beschlägen 9 gezeigt, welche mit den erfindungsgemässen Schrauben 1 gegenseitig verbunden werden. Dies stellt natürlich nur eine kleine Auswahl der Einsatzmöglichkeiten der erfindungsgemässen Schraube 1 dar.

## Patentansprüche

1. Schraube für den Einsatz bei Fenster- oder Türprofilen, bestehend aus einem mit einem Gewinde versehenen Schaft, einer Bohrspitze und einem mit einem Werkzeugangriff ausgestatteten Kopf, **dadurch gekennzeichnet, dass** die Schraube (1) ein metrisches Gewinde (2) mit einem Verhältnis von Durchmesser (DA) zu Gewindesteigung (S) von annähernd 4:1 aufweist.

2. Schraube nach Anspruch 1, **dadurch gekennzeichnet, dass** ein metrisches Gewinde (2) mit einem Durchmesser (DA) von annähernd 3,9 mm und einer Gewindesteigung (S) von annähernd 1,0 mm vorgesehen ist.

3. Schraube nach Anspruch 1, **dadurch gekennzeichnet, dass** das Verhältnis von Durchmesser (DA) der Schraube (1) und Länge (L) der Bohrspitze (4) annähernd 1:2 beträgt.

4. Schraube nach den Ansprüchen 1 bis 3, **dadurch gekennzeichnet, dass** ein metrisches Gewinde (2) mit einem Aussendurchmesser (DA) von 3,9 mm und einer Gewindesteigung (S) von 1,0 mm vorgesehen ist und die Länge (L) der Bohrspitze (4) 7,0 mm beträgt.

5. Schraube nach Anspruch 1 und einem der vorstehenden Ansprüche, **dadurch gekennzeichnet, dass** diese als Senkkopfschraube ausgebildet ist.

6. Schraube nach Anspruch 5, **dadurch gekennzeichnet, dass** die Oberseite des Schraubenkopfes (6) linsenförmig konvex ausgebildet und mit einem Innenangriff und/oder einem Angriffsschlitz (5) versehen ist.

## Claims

1. A screw for use in window or door profiled sections, comprising a shank provided with a screw-thread, a drill tip and a head provided with a tool-engagement portion, **characterised in that** the screw (1) has a metric screw-thread (2) with a ratio of diameter (DA) to thread pitch (S) of approximately 4:1.

2. A screw according to Claim 1, **characterised in that** a metric thread (2) with a diameter (DA) of approximately 3.9 mm and a thread pitch (S) of approximately 1.0 mm is provided.

3. A screw according to Claim 1, **characterised in that** the ratio of diameter (DA) of the screw (1) and length (L) of the drill tip (4) is approximately 1:2.

4. A screw according to any one of Claims 1 to 3, **characterised in that** a metric thread (2) with an external diameter (DA) of 3.9 mm and a thread pitch (S) of 1.0 mm is provided, and the length (L) of the drill tip (4) is 7.0 mm.

5. A screw according to Claim 1 and any one of the preceding Claims, **characterised in that** it is in the form of a countersunk head screw.

6. A screw according to Claim 5, **characterised in that** the upper side of the screw head (6) is of convex lenticular form and is provided with an internal recess and/or an engagement slot (5).

## Revendications

1. Vis destinée à des profils de fenêtre ou de porte, composée d'un corps fileté, d'une pointe perforante et d'une tête équipée d'une prise pour un outil,
**caractérisé en ce que**
la vis (1) a un filetage métrique (2) avec un rapport voisin de 4 :1 entre son diamètre (DA) et le pas (S) du filetage.

2. Vis selon la revendication 1,
**caractérisée par**
un filetage métrique (2) d'un diamètre (DA) voisin de 3,9 mm et d'un pas de vis (S) voisin de 1,0 mm.

3. Vis selon la revendication 1,
**caractérisé en ce que**
le rapport entre le diamètre (DA) de 1a vis (1) et 1a longueur (L) de 1a pointe de perçage (4) est d'environ 1 :2

4. Vis selon les revendications 1 à 3,
**caractérisée par**
un filetage métrique (2) ayant un diamètre extérieur (DA) de 3,9 mm et un pas de vis (S) de 1,0 mm, la longueur (L) de la pointe perforante (4) étant de 7, 0 mm.

5. Vis selon 1a revendication 1 et l'une des revendications précédentes,
**caractérisée en ce qu'**
il s'agit d'une vis à tête fraisée.

6. Vis selon 1a revendication 5,
**caractérisé en ce que**
le côté supérieur de la tête de vis (6) est bombé avec une forme lenticulaire et comporte une empreinte et/ ou une fente (5) pour un outil.
